# FASCICULE DE BREVET EUROPEEN

(11) **EP 1 747 391 B1**
(45) Date de publication et mention de la délivrance du brevet: **11.02.2009**
(21) Numéro de dépôt: 05771042.8
(22) Date de dépôt: 17.05.2005
(51) Int. Cl.: F16K 5/18

(54) **VANNE DE COMMANDE AVEC SEGMENT D'ETANCHEITE POUR CIRCUIT DE CIRCULATION DE FLUIDE**
STEUERUNGSVENTIL MIT DICHTUNGSSEGMENT FÜR EINEN FLÜSSIGKEITSKREISLAUF
CONTROL VALVE WITH SEALING SEGMENT FOR FLUID CIRCULATION CIRCUIT

(30) Priorité: 17.05.2004 FR 0405345
(43) Date de publication de la demande: 31.01.2007
(73) Titulaire: Valeo Systèmes Thermiques, 78321 Le Mesnil St Denis Cedex (FR)
(72) Inventeur: FARKH, Alain, F-78490 Montfort l'Amaury (FR); VACCA, Frédéric, F-78910 Behoust (FR); DUMETZ, Jean-Bernard, 23, rue Champ Lagarde F-78000 Versailles (FR)
(74) Mandataire: Rolland, Jean-Christophe
(86) Numéro de dépôt international: PCT/FR2005/001222
(87) Numéro de publication internationale: WO 2005/124205

(56) Documents cités:
- FR-A- 2 827 357
- US-A- 3 489 389

## Description

L'invention concerne une vanne de commande pour un circuit de circulation de fluide, en particulier pour un circuit de refroidissement d'un moteur thermique de véhicule automobile.

Plus particulièrement, l'invention concerne une vanne de commande du type comprenant un corps de vanne présentant, notamment, une paroi de fond dans laquelle débouche un orifice axial et une paroi latérale dans laquelle débouchent au moins deux orifices latéraux, le corps de vanne délimitant un logement de révolution pour un organe de réglage propre à tourner, en rotation, autour d'un axe de rotation et à prendre différentes positions angulaires pour contrôler la distribution du fluide au travers des orifices, et dans laquelle l'organe de réglage est entouré d'un segment d'étanchéité en forme d'anneau ouvert, qui est solidaire en rotation de l'organe de réglage.

On connaît déjà, d'après là demande de brevet français n°01 09218 déposée le 11 juillet 2001 (numéro de publication: FR-A-2827357), une vanne de commande de ce type que l'on peut qualifier aussi de "vanne rotative" étant donné que l'organe de réglage tourne autour d'un axe de rotation et est reçu dans un logement de révolution aménagé dans le corps de vanne.

Dans cette vanne de commande connue, l'orifice axial constitue habituellement une voie d'entrée pour le fluide, tandis que les orifices latéraux constituent des voies de sortie pour le fluide, la distribution du fluide au travers des voies de sortie étant contrôlée en fonction de la position angulaire prise par l'organe de réglage.

Dans une application préférentielle d'une telle vanne de commande, la paroi latérale comporte trois orifices latéraux qui forment des voies de sortie et qui communiquent respectivement avec trois branches que comporte le circuit de circulation de fluide. Cette vanne de commande connue trouve une application particulière dans les circuits de refroidissement de moteurs thermiques de véhicules automobiles. Dans ce cas, l'orifice axial, formant entrée de fluide, est relié à une arrivée de fluide de refroidissement en provenance du moteur thermique, tandis que les trois orifices latéraux, formant sortie de fluide, sont reliés respectivement à trois branches du circuit. Ce circuit comprend une première branche qui contient un radiateur de refroidissement du moteur, une deuxième branche qui constitue une dérivation du radiateur de refroidissement et une troisième branche qui contient un aérotherme pour le chauffage de l'habitacle.

La vanne de commande décrite dans la demande de brevet français 01 09218 comprend un organe de réglage de forme générale cylindrique qui est entouré d'un segment d'étanchéité en forme d'anneau ouvert et qui est solidaire en rotation de l'organe de réglage pour empêcher toute fuite accidentelle du fluide vers un orifice latéral, définissant une sortie de vanne.

Dans la publication précitée, le segment d'étanchéité est agencé avec un faible jeu autour de l'organe de réglage, ce qui permet au segment d'étanchéité d'être plaqué intérieurement contre la paroi latérale du corps de vanne pour assurer une étanchéité sous l'action de la pression du fluide.

Toutefois, il a été constaté que ce segment d'étanchéité assurait parfaitement sa fonction d'étanchéité dès lors que la différence de pression et/ou le débit du fluide pénétrant dans le corps de vanne étaient suffisamment importants.

En revanche, dès que la pression et/ou le débit chutaient au dessous d'une certaine valeur, l'étanchéité n'était pas parfaite et des fuites de fluide pouvaient être occasionnées.

Or, une telle vanne est destinée à fonctionner avec de larges gammes de différence de pression et/ou de débit et il est nécessaire que l'étanchéité puisse être assurée en toute circonstance.

L'invention a notamment pour but de fournir une vanne de commande du type défini en introduction, dans laquelle le segment d'étanchéité est agencé pour assurer une étanchéité en toute circonstance, sur une gamme étendue de pression et/ou de débit de fluide, y compris dans des situations où cette pression et/ou ce débit atteignent une très faible valeur.

L'invention vise encore à procurer une telle vanne de commande qui convient tout particulièrement pour un circuit de refroidissement d'un moteur thermique de véhicule automobile.

L'invention propose à cet effet une vanne de commande du type défini en introduction, dans laquelle des moyens élastiques sont prévus pour écarter deux extrémités du segment d'étanchéité et le déformer radialement vers l'extérieur et assurer ainsi un plaquage du segment d'étanchéité contre le logement du corps de vanne.

Grâce à ces moyens élastiques, le segment d'étanchéité est sollicité en permanence dans la direction radiale, vers l'extérieur, ce qui assure un contact étroit de ce segment contre lue logement du corps de vanne, assurant ainsi une étanchéité vis à vis des orifices latéraux et empêchant toute fuite substantielle du fluide.

Ces moyens élastiques sont convenablement choisis pour que cette déformation radiale n'engendre pas une pression de plaquage trop élevée qui nuirait à un bon fonctionnement de la vanne de commande.

Il est essentiel en effet que le segment d'étanchéité génère le minimum de frottement avec la paroi interne du corps de vanne pour limiter la puissance de l'actionneur, généralement de type électrique, qui entraîne l'organe de réglage en rotation autour de son axe.

Dans une première forme générale de réalisation de l'invention, les moyens élastiques comprennent au moins un organe ressort interposé entre les extrémités du segment d'étanchéité pour les écarter mutuellement.

Dans une première variante, l'organe ressort est un jonc formé d'un matériau à effet ressort. Ce jonc peut, par exemple, comporter un coude en U reliant deux branches agencées pour être appliquées contre les extrémités du segment d'étanchéité.

Dans une deuxième variante de réalisation, l'organe ressort est une tôle métallique ayant deux côtés opposés agencés pour être appliqués contre les extrémités du segment d'étanchéité.

Il est avantageux que les deux extrémités du segment d'étanchéité soient réalisées sous la forme de deux bords repliés délimitant respectivement deux gorges parallèles en vis à vis pour la réception de l'organe ressort.

Dans une autre forme de réalisation, les moyens élastiques comprennent au moins un organe ressort réalisé sous la forme d'un anneau à expansion radiale interposé entre l'organe de réglage et le segment d'étanchéité.

Dans un exemple privilégié, la vanne comprend deux anneaux à expansion radiale réalisés sous la forme de jonc en matériau ressort et introduits chacun dans une gorge périphérique de l'organe de réglage.

Dans une deuxième forme générale de réalisation de l'invention, les moyens élastiques comprennent une déformation du segment d'étanchéité pour qu'il présente un diamètre extérieur qui est supérieur au diamètre intérieur du logement et permettre ainsi un montage sous pré-contrainte du segment d'étanchéité dans le logement.
Ce segment est avantageusement réalisé dans un matériau à effet ressort, en particulier en acier ressort. Pour diminuer le frottement, il est préférable que ce segment d'étanchéité soit muni extérieurement d'un revêtement réalisé dans une matière à faible coefficient de frottement. Le segment d'étanchéité peut être muni d'une couche d'accrochage pour faciliter l'accrochage du revêtement.

Il est avantageux aussi que ce segment d'étanchéité comporte une surface extérieure lisse dans laquelle débouchent une multiplicité de trous borgnes, régulièrement répartis, pour diminuer la surface de contact entre le segment d'étanchéité et la paroi latérale.

Dans un mode de réalisation préférentiel, l'orifice axial constitue une entrée de fluide, tandis que les orifices latéraux constituent des sorties de fluide.

Sous un autre aspect, l'invention concerne un circuit de circulation de fluide comprenant une vanne de commande telle que définie précédemment, dont l'orifice axial est relié à une source de fluide et dont les orifices latéraux sont reliés respectivement à des branches du circuit.

Dans une application préférentielle, ce circuit est réalisé sous la forme d'un circuit de refroidissement d'un moteur thermique de véhicule automobile, parcouru par un fluide de refroidissement sous l'action d'une pompe de circulation, et la vanne de commande est une vanne à trois voies dont l'orifice axial est relié à une arrivée de fluide de refroidissement en provenance du moteur et dont les trois orifices latéraux sont reliés respectivement à une première branche du circuit qui contient un radiateur de refroidissement du moteur, à une deuxième branche du circuit qui constitue une dérivation du radiateur de refroidissement et à une troisième branche du circuit qui contient un aérotherme pour le chauffage d'un habitacle.

Dans la description qui suit, faite seulement à titre d'exemple, on se réfère aux dessins annexés, sur lesquels :
- la figure 1 est une vue en perspective d'une vanne de commande, du type à trois voies, selon l'invention ;
- la figure 2 est une vue en coupe de la vanne de commande de la figure 1, le plan de coupe passant par l'axe de rotation de l'organe de réglage ;
- la figure 3 est une vue en coupe transversale de la vanne de commande des figures 1 et 2 ;
- la figure 4 est une vue en perspective d'un segment d'étanchéité destiné à faire partie d'une vanne de commande selon l'invention ;
- la figure 5 représente le segment d'étanchéité de la figure 4 en configuration développée ;
- la figure 6 est une vue en coupe du segment d'étanchéité montrant la structure multicouches de ce dernier ;
- la figure,7 est une vue en perspective d'un organe de réglage muni d'un segment d'étanchéité équipé d'un organe ressort en forme de U ;
- la figure 8 est une vue d'extrémité correspondant à la figure 7 ;
- la figure 9 est une vue en perspective d'un segment d'étanchéité muni d'un organe ressort en tôle ;
- la figure 10 est une vue d'extrémité correspondant à la figure 9 ;
- la figure 11 est une vue schématique d'un organe de réglage muni d'un segment d'étanchéité dont l'expansion radiale est assurée par deux anneaux à expansion radiale ;
- la figure 12 est une vue d'un segment d'étanchéité, analogue à celui de la figure 5, représenté en configuration développée ;
- la figure 13 est une vue en coupe du segment d'étanchéité de la figure 12 ;
- la figure 14 est une vue en coupe transversale d'une vanne de commande munie d'un segment d'étanchéité à expansion radiale, représenté avant et après montage dans le corps de vanne ; et
- la figure 15 est un schéma d'un circuit de refroidissement d'un moteur thermique de véhicule automobile incorporant une vanne de commande selon l'invention.

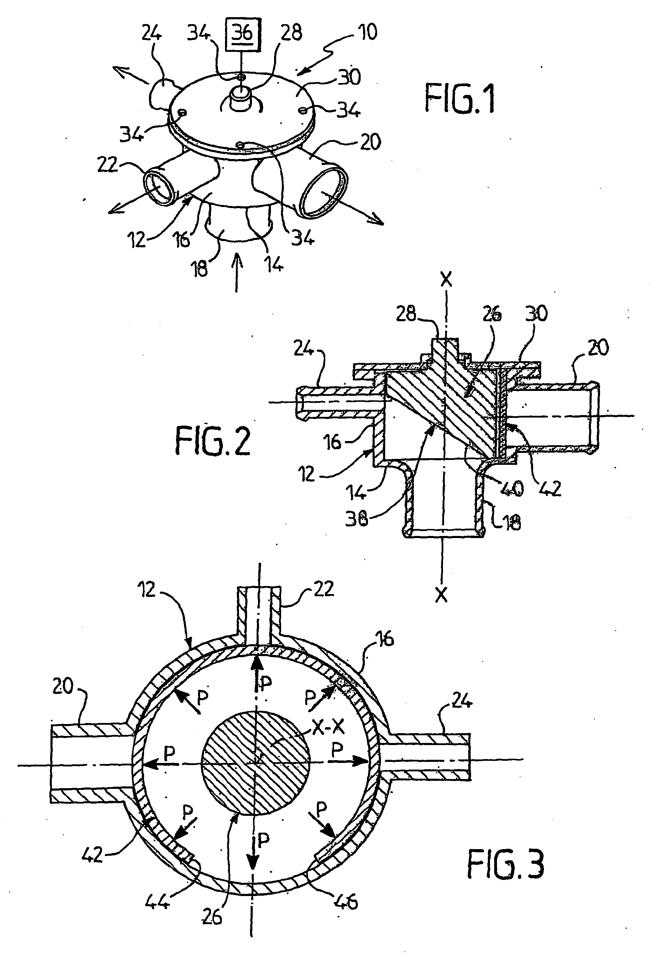

Les figures 1 et 2 montrent une vanne de commande 10 qui comprend un corps cylindrique 12 limité par une paroi de fond 14 et par une paroi latérale cylindrique 16 d'axe XX. Dans la paroi de fond 14 débouche un orifice axial 18 délimité par une tubulure. Dans la paroi latérale cylindrique 16 débouchent trois orifices latéraux 20, 22 et 24 délimités par trois tubulures respectives. Dans l'exemple, l'orifice axial 18 constitue une entrée de fluide, tandis que les trois orifices latéraux 20, 22 et 24 constituent des sorties de la vanne. Il s'agit donc d'une vanne à quatre voies avec une voie d'entrée et trois voies de sortie.

Dans la suite, les orifices 18, 20, 22 et 24 et les tubulures correspondantes seront à chaque fois désignés par les mêmes références.

Les tubulures de sortie 20, 22 et 24 débouchent radialement dans la paroi 16. Les tubulures 20 et 24 sont diamétralement opposées, tandis que la tubulure 22 forme un angle de 90° par rapport à l'axe commun des tubulures 20 et 24. En outre, les tubulures 20, 22 et 24 ont des diamètres successivement décroissants.

A l'intérieur du corps de vanne 12 est logé un organe de réglage 26, encore appelé organe tournant, qui est réalisé sous la forme d'un élément généralement cylindrique et qui se prolonge par une tige 28 dirigée suivant l'axe XX. Cette tige 28 passe au travers d'une ouverture centrale que comporte un couvercle 30 de forme circulaire. Ce couvercle 30 est vissé sur une collerette 32 du corps de vanne par l'intermédiaire de quatre vis de fixation 34, avec interposition d'un joint d'étanchéité (non représenté). L'organe de réglage 26 est entraîné en rotation autour de l'axe XX par un actionneur 36 représenté schématiquement sur la figure 1. Il peut s'agir, par exemple, d'un moto-réducteur constitué d'un moteur électrique couplé à un réducteur, dont la position est asservie grâce à une recopie de position d'un capteur, pour amener l'organe de réglage 26 dans une multiplicité de positions différentes. En variante, on peut utiliser d'autres types d'actionneurs, par exemple des moteurs pas à pas ou des moteurs sans balais.

Dans l'exemple représenté, l'organe de réglage 26 est plein et comprend une extrémité tronquée 38 constituée par une face plane formant un angle voisin de 45° avec l'axe de rotation. L'organe de réglage 26 permet de contrôler les sorties de fluide 20, 22 et 24 avec une loi définie en fonction de sa position angulaire dans le corps de vanne.

Toutefois, l'organe de réglage 26 est susceptible de nombreuses variantes de réalisation. En particulier, il peut être constitué par un corps creux, et non pas par un corps plein, et ne pas comporter de face tronquée.

L'organe de réglage 26 est entouré, sur une partie de sa périphérie, d'un segment d'étanchéité 42 en forme d'anneau ouvert, solidaire en rotation de l'organe de réglage, et propre à venir en contact étanche avec la face interne de la paroi latérale 16. L'organe de réglage permet l'entraînement du segment d'étanchéité avec un minimum de jeu et avec une fonction de déflecteur à l'égard du fluide qui traverse la vanne. Ceci permet de renvoyer le fluide vers l'une au moins des sorties de la vanne avec un minimum de chute de pression. Ceci est tout particulièrement intéressant pour le renvoi du fluide de refroidissement d'un moteur vers la branche qui contient le radiateur de refroidissement du moteur.

Comme on le voit mieux sur la figure 3, le segment d'étanchéité 42 est agencé pour se plaquer radialement contre la paroi latérale 16 en vue d'assurer une étanchéité comme montré par les flèches radiales P. Il est en effet essentiel que ce segment d'étanchéité puisse obturer sélectivement, et d'une manière étanche, les orifices latéraux 20, 22 et 24, en fonction de la position angulaire de l'organe de réglage 26. L'invention vise à procurer un segment d'étanchéité qui puisse garantir une telle étanchéité, quels que soient la différence de pression et/ou le débit du fluide présent dans le corps de vanne, et en particulier même lorsque cette différence de pression et/ou -ce débit atteignent des valeurs très faibles, voire nulles.

L'invention propose pour cela des moyens élastiques prévus pour écarter, en toute circonstance, les extrémités 44 et 46 du segment d'étanchéité (figure 3), et le déformer radialement vers l'extérieur.

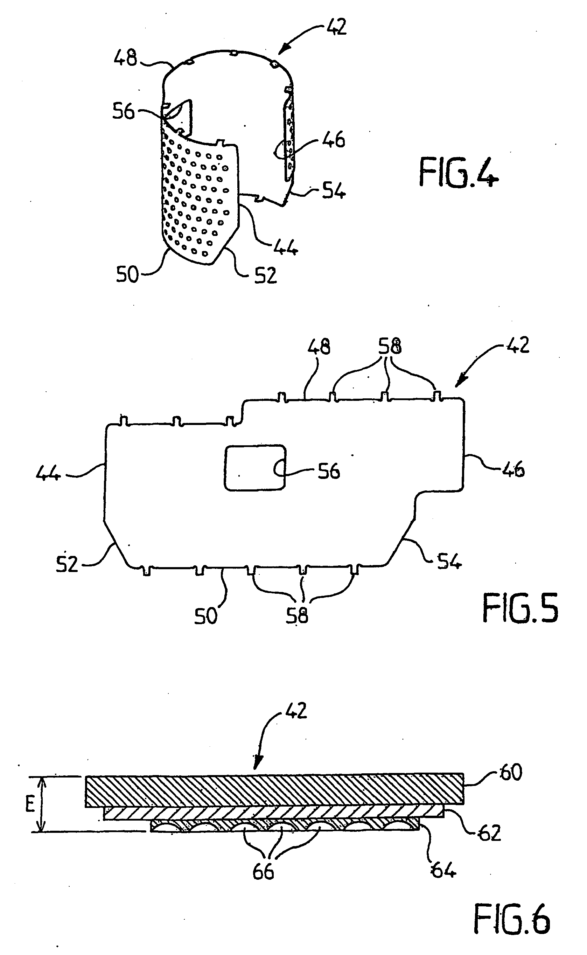

Comme on peut le voir sur la figure 4, le segment d'étanchéité 42, en forme d'anneau ouvert, présente une surface généralement cylindrique conçue pour se plaquer étroitement contre l'intérieur de la paroi latérale du corps de vanne. Le segment d'étanchéité 42 est limité en partie supérieure par un bord 48 en forme d'arc de cercle (ici un bord étagé) et, en partie inférieure, par un bord 50 également en arc de cercle. Il est limité latéralement par deux bords 44 et 46 généralement parallèles à l'axe XX qui constituent les deux extrémités mentionnées précédemment. Il présente en outre deux bords conformés 52 et 54 qui relient le bord inférieur 50 aux bords latéraux respectifs 44 et 46. Enfin, une fenêtre 56 est aménagée dans le segment d'étanchéité.

La forme du segment d'étanchéité, en configuration à plat ou développée est montrée sur la figure 5. On voit également que les bords supérieur 48 et inférieur 50 sont munis de pattes repliables 58 pour assurer le maintien du segment d'étanchéité sur l'organe de réglage 26.

Dans un exemple de réalisation, le segment d'étanchéité 42 est réalisé dans un matériau multicouches. Le segment est réalisé avantageusement en une tôle métallique, par exemple d'une tôle d'acier plane (inoxydable ou galvanisée pour protection contre la corrosion) ou d'une base en bronze. Cette tôle métallique est découpée, par exemple par emboutissage, pour former le développement du segment d'étanchéité tel que représenté sur la figure 5.

La tôle métallique 60 (figure 6) est revêtue d'une couche de frittage 62 avantageusement formée en une poudre métallique, par exemple en bronze. Cette couche sert d'accrochage à un revêtement extérieur 64 réalisé dans une matière à faible coefficient de frottement qui peut être choisi notamment parmi les polyamides, les polyfluoréthylènes. En particulier on peut utiliser une matière à base de polyfluoréthylène et de graphite.

Il est avantageux que ce revêtement comporte une surface extérieure lisse dans laquelle débouchent une multiplicité de trous borgnes 66 ayant par exemple chacun la forme d'une calotte sphérique, ces trous étant répartis régulièrement sur toute la surface du revêtement. Ces trous constituent une multitude d'embrèvements non débouchants qui permettent de diminuer la surface de frottement et donc le couple de frottement entre le segment d'étanchéité et la paroi interne du corps de vanne. Cela permet ainsi d'utiliser un actionneur 36 nécessitant une motorisation moins puissante et donc un plus faible encombrement. A titre d'exemple, l'épaisseur totale E du segment d'étanchéité (constituée par les trois couches) peut être de l'ordre de 0,5 mm.

Comme indiqué précédemment, l'invention prévoit des moyens élastiques pour tendre à écarter en permanence les bords d'extrémité 44 et 46 du segment.

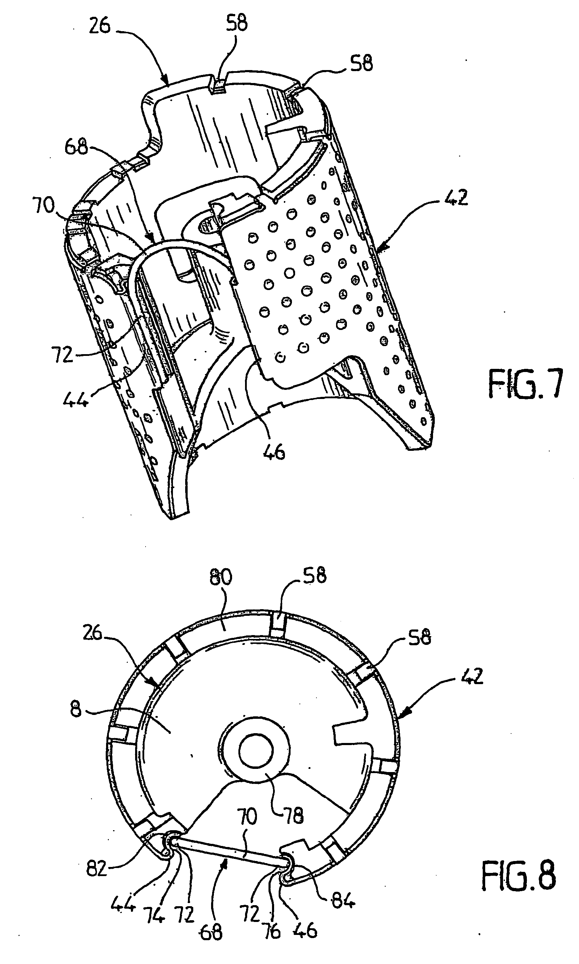

Dans la forme de réalisation des figures 7 et 8, auxquelles on se réfère maintenant, un organe ressort 68 est interposé entre les extrémités 44 et 46 du segment d'étanchéité 42 pour les écarter mutuellement. L'organe ressort 68 est un jonc formé d'un matériau à effet ressort, par exemple en acier à effet ressort. Il est réalisé ici sous la forme d'un fil comportant un coude en U 70 reliant deux branches 72, lesquelles sont appliquées contre les extrémités du segment d'étanchéité.

Les deux extrémités 44 et 46 constituent deux bords repliés délimitant respectivement deux gorges 74 et 76 parallèles et en vis à vis l'une de l'autre pour recevoir les deux branches de l'organe ressort. Dans l'exemple de réalisation des figures 7 et 8, on voit que le corps de l'organe de réglage 26 est creux. Il comporte un fût axial 78 relié à une enveloppe 80 de forme générale cylindrique par une partie intermédiaire 81. Cette enveloppe 80 est interrompue et ménage deux gorges 82 et 84 dans lesquelles sont reçus les bords repliés 44 et 46 du segment d'étanchéité. On voit également que les pattes 58 du segment sont repliées et rabattues contre l'enveloppe 80. Ceci permet de maintenir en place le segment d'étanchéité autour de l'organe de réglage tout en lui permettant une expansion radiale pour assurer l'étanchéité.

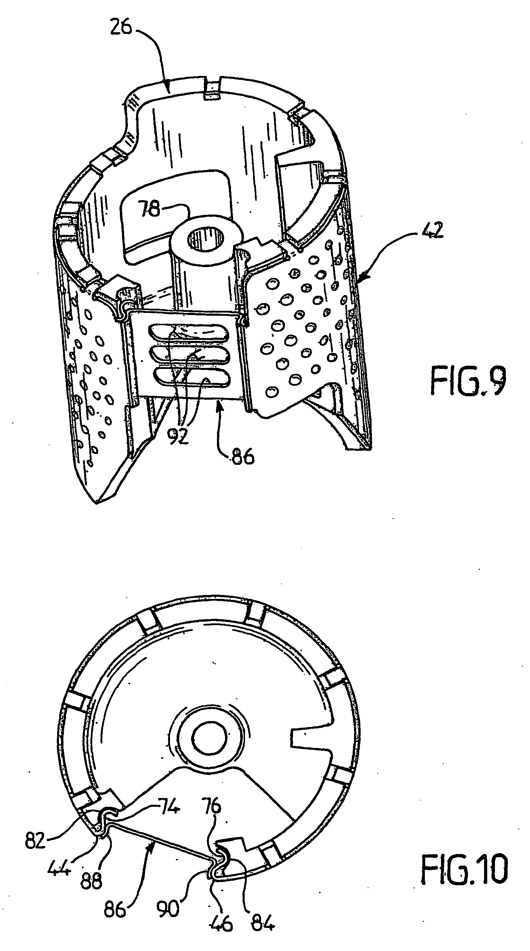

La forme de réalisation des figures 9 et 10 s'apparente à celle des figures 8 et 9. L'organe ressort 86 est ici constitué d'une tôle métallique ayant deux bords opposés 88 et 90 agencés pour être appliqués contre les extrémités du segment d'étanchéité, c'est à dire dans les gorges respectives 74 et 76 analogues à celles représentées précédemment. Dans l'exemple, l'organe ressort 86 comporte trois découpes ou fenêtres intérieures 92 (figure 9) destinées à garantir une meilleure élasticité.

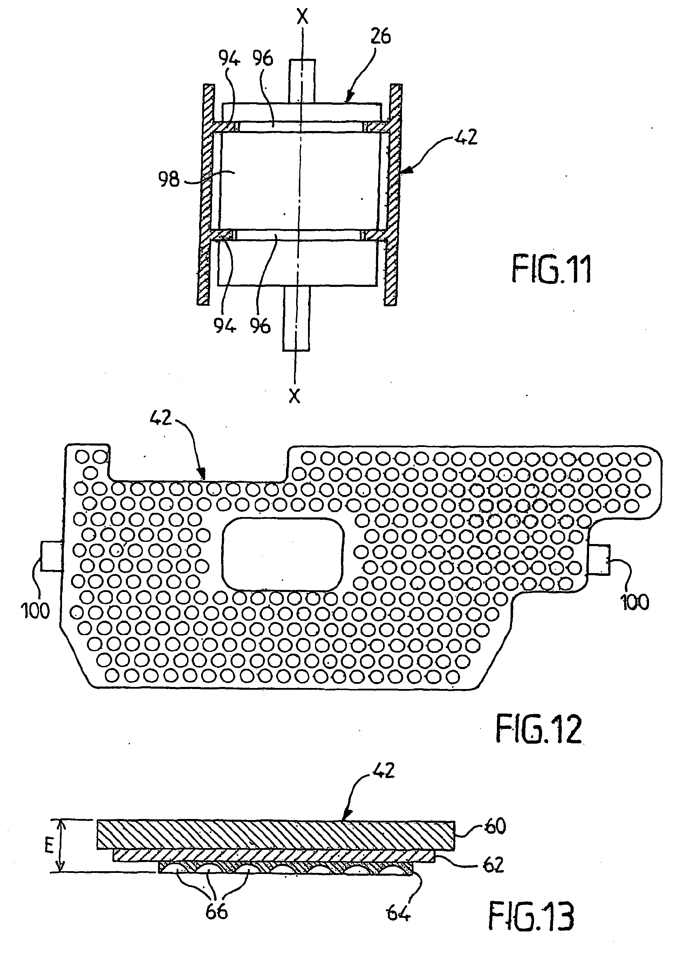

La figure 11 qui montre une autre forme de réalisation dans laquelle les moyens élastiques comprennent deux organes ressorts 94 réalisés chacun sous la forme d'un anneau à expansion radiale interposé entre l'organe de réglage 26 et le segment d'étanchéité 42. Chacun des anneaux 94 est constitué d'un jonc en matériau ressort qui est introduit dans une gorge périphérique 96 aménagée dans une paroi cylindrique 98 de l'organe de réglage.

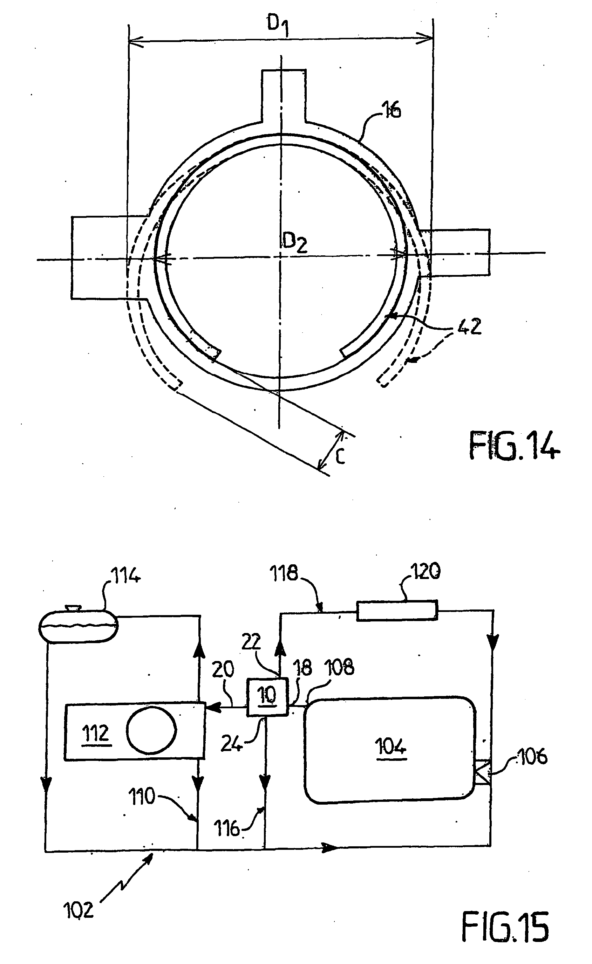

On se réfère maintenant aux figures 12 et 13 qui montrent respectivement une vue en développé d'un autre segment d'étanchéité 42 selon l'invention et une vue en coupe de ce segment. La forme générale développée du segment est analogue à celle de la figure 5. On voit qu'il comprend de plus des pattes rabattables 100 pour assurer son maintien, avec possibilité d'expansion radiale, autour de l'organe de réglage. Sur la coupe de la figure 13, qui est analogue à celle de la figure 6, on retrouve la même succession de couches. Toutefois, dans cet exemple, l'épaisseur E est supérieure, par exemple de l'ordre de 1mm. En effet, dans cette forme de réalisation, les moyens élastiques sont constitués par une déformation du segment d'étanchéité pour qu'il présente un diamètre extérieur D1 (figure 14) qui est supérieur au diamètre intérieur D2 du logement.

Le segment d'étanchéité 42 est formé par des outils appropriés, par exemple avec un outil de roulage, pour qu'il présente un diamètre initial D1 supérieur au diamètre nominal D2 de l'alésage ou du logement de la vanne. Le roulage du matériau est effectué de telle sorte que le revêtement 64 soit situé vers l'extérieur et puisse venir s'appliquer contre l'alésage interne du corps de vanne. Ceci implique une précontrainte du segment d'étanchéité pendant sa mise en place dans l'alésage du corps de vanne. Une fois mis en place, le segment d'étanchéité présente un diamètre extérieur qui correspond au diamètre intérieur de l'alésage du corps de vanne, comme on peut le voir sur la figure 14.

On utilise en conséquence la raideur de la tôle métallique (par exemple une tôle d'acier) du segment pour assurer un plaquage du segment notamment à basse pression du fluide. C'est la raison pour laquelle, dans ce mode de réalisation, l'épaisseur de la tôle métallique formant le revêtement, doit être supérieure à celle du revêtement utilisé dans les formes de réalisation précédentes. Sur la figure 14, on a représenté aussi la course C qui résulte de la mise en place sous contrainte du segment d'étanchéité dans le corps de vanne.

Au lieu d'être réalisé par roulage, le segment d'étanchéité pourrait aussi, en variante, être réalisé par moulage.

On se réfère maintenant à la figure 15 qui illustre un circuit 102 pour le refroidissement d'un moteur thermique 104 de véhicule automobile. Le circuit 102 est parcouru par un fluide de refroidissement, habituellement de l'eau additionnée d'un antigel, qui circule sous l'action d'une pompe 106. Le fluide échauffé par le moteur quitte ce dernier par une sortie 108 qui est reliée à la tubulure 18 d'une vanne de commande 10 du type décrit précédemment.

Cette vanne comprend également trois tubulures de sortie 20, 22 et 24 qui sont reliées à trois branches du circuit. La tubulure 20 est reliée à une première branche 110 qui contient un radiateur de refroidissement 112 du moteur et un vase d'expansion 114. La tubulure 24 est reliée à une deuxième branche 116 qui constitue une dérivation du radiateur de refroidissement 112. Enfin, la tubulure de sortie 22 est reliée à une troisième branche 118 qui contient un aérotherme 120 servant au chauffage de l'habitacle du véhicule.

La vanne 10 permet ainsi de gérer indépendamment les débits de fluide dans les trois branches 110, 116 et 118 afin d'optimiser la température du moteur thermique et le chauffage de l'habitacle.

Bien entendu, l'invention n'est pas limitée aux formes de réalisation décrites précédemment et s'applique à d'autres variantes, notamment en ce qui concerne la nature des moyens élastiques permettant d'assurer le plaquage du segment d'étanchéité contre la paroi latérale du corps de vanne. Il est possible aussi de ménager un jeu entre l'organe de réglage et le segment d'étanchéité. L'invention n'est pas non plus limitée à l'application à un circuit de refroidissement d'un moteur thermique.

En outre, l'orifice axial de la vanne ne constitue pas nécessairement un orifice d'entrée et peut aussi, en variante, constituer un orifice de sortie. En corollaire, les orifices latéraux peuvent constituer aussi des orifices d'entrée, et non pas des orifices de sortie pour le fluide.

## Revendications

1. Vanne de commande pour un circuit de circulation de fluide, comprenant un corps de vanne (12), un organe de réglage (26) et un segment d'étanchéité (42), ledit corps de vanne délimitant un logement de révolution pour ledit organe de réglage (26) propre à tourner autour d'un axe de rotation (X)X et à prendre différentes positions angulaires pour contrôler la distribution du fluide au travers d'orifices dudit corps de vanne(12), et dans laquelle l'organe de réglage (26) est entouré dudit segment d'étanchéité (42) en forme d'anneau ouvert, qui est solidaire en rotation de l'organe de réglage (26),
**caractérisée en ce que** ladite vanne comporte en outre des moyens élastiques (68 ; 86 ; 94) prévus pour écarter deux extrémités (44, 46) du segment d'étanchéité (42) afin de le déformer radialement vers l'extérieur et d'assurer ainsi un plaquage du segment d'étanchéité (42) contre le logement du corps de vanne.

2. Vanne de commande selon la revendication 1, **caractérisée en ce que** les moyens élastiques comprennent au moins un organe ressort (68 ; 86) interposé entre les extrémités (44, 46) du segment d'étanchéité (42) pour les écarter mutuellement.

3. Vanne de commande selon la revendication 2, **caractérisée en ce que** l'organe ressort est un jonc (68) formé d'un matériau à effet ressort.

4. Vanne de commande selon la revendication 3, **caractérisée en ce que** le jonc (68) comporte un coude en U (70) reliant deux branches (72) agencées pour être appliquées contre les extrémités (44, 46) du segment d'étanchéité (42).

5. Vanne de commande selon la revendication 2, **caractérisée en ce que** l'organe ressort est une tôle métallique (86) ayant deux côtés opposés (88, 90) agencés pour être appliqués contre les extrémités (44, 46) du segment d'étanchéité (42).

6. Vanne de commande selon l'une des revendications 2 à 5, **caractérisée en ce que** les deux extrémités (44, 46) du segment d'étanchéité (42) sont réalisés sous la forme de deux bords repliés délimitant deux gorges (74, 76) parallèles en vis-à-vis pour la réception de l'organe ressort.

7. Vanne de commande selon la revendication 1, **caractérisée en ce que** les moyens élastiques comprennent au moins un organe ressort (94) réalisé sous la forme d'un anneau à expansion radiale interposé entre l'organe de réglage (26) et le segment d'étanchéité (42).

8. Vanne de commande selon la revendication 7, **caractérisée en ce qu'**elle comprend deux anneaux (94) à expansion radiale réalisés sous la forme de joncs en matériau ressort et introduits chacun dans une gorge périphérique (96) de l'organe de réglage (26).

9. Vanne de commande selon la revendication 1, **caractérisée en ce que** les moyens élastiques comprennent une déformation du segment d'étanchéité (42) pour qu'il présente un diamètre extérieur (D1) qui est supérieur au diamètre intérieur (D2) du logement pour permettre un montage sous précontrainte du segment d'étanchéité dans le logement.

10. Vanne de commande selon l'une des revendications 1 à 9, **caractérisée en ce que** le segment d'étanchéité (42) est réalisé dans un matériau à effet ressort, en particulier en acier ressort.

11. Vanne de commande selon la revendication 10, **caractérisée en ce que** le segment d'étanchéité (42) est muni extérieurement d'un revêtement (64) réalisé dans une matière à faible coefficient de frottement.

12. Vanne de commande selon la revendication 11, **caractérisée en ce que** la matière à faible coefficient de frottement est choisie parmi les polyamides et le polyfluoréthylène.

13. Vanne de commande selon l'une des revendications 11 et 12, **caractérisée en ce que** le segment d'étanchéité (42) est muni d'une couche d'accrochage (62) pour faciliter l'accrochage du revêtement (64).

14. Vanne de commande selon l'une des revendications 1 à 13, **caractérisée en ce que** le segment d'étanchéité (42) comporte une surface extérieure lisse dans laquelle débouche une multiplicité de trous borgnes (66), régulièrement répartis, ce qui permet de diminuer la surface de contact entre le segment d'étanchéité (42) et la paroi latérale (16).

15. Vanne de commande selon l'une des revendications 1 à 14, **caractérisée en ce que** ledit corps de vanne (12) comprend une paroi de fond (14) dans laquelle débouche un orifice axial (18) et une paroi latérale (16) dans laquelle débouchent au moins deux orifices latéraux (20, 22, 24), l'orifice axial (18) constituant une entrée de fluide, tandis que les orifices latéraux (20, 22, 24) constituent des sortie de fluide.

16. Circuit de circulation de fluide, **caractérisé en ce qu'**il comprend une vanne de commande selon la revendication 15, dont l'orifice axial (18) est relié à une source de fluide (108) et dont les orifices latéraux (20, 22, 24) sont reliés respectivement à des branches (110, 118, 116) du circuit.

17. Circuit de circulation selon la revendication 16, **caractérisé en ce qu'**il est réalisé sous la forme d'un circuit de refroidissement (102) d'un moteur thermique (104) de véhicule automobile, qui est parcouru par un fluide de refroidissement sous l'action d'une pompe de circulation (106), et **en ce que** la vanne de commande (10) est une vanne à trois voies dont l'orifice axial (18) est relié à une arrivée (108) de fluide de refroidissement en provenance du moteur, et dont les trois orifices latéraux (20, 24, 22) sont reliés respectivement à une première branche (110) qui contient un radiateur de refroidissement (112) du moteur, à une deuxième branche (116) qui constitue une dérivation du radiateur de refroidissement et à une troisième branche (118) qui contient un aérotherme (120) pour le chauffage d'un habitacle.

## Claims

1. Control valve for a fluid circulation circuit, comprising a valve body (12), an adjustment member (26) and a sealing segment (42), said valve body delimiting a housing of revolution for said adjustment member (26), said adjusting member (26) being suitable for rotating about an axis of rotation (X) and for taking different angular positions in order to control the delivery of the fluid through orifices of said valve body (12), and said adjustment member (26) being surrounded by said sealing segment (42) in the shape of an open ring, which is secured in rotation to said adjustment member (26),
**characterized in that** said control valve is further provided with elastic means (68; 86; 94) provided to separate two ends (44, 46) of the sealing segment (42) in order to deform it radially outwards and thereby press the sealing segment (42) against the housing of the valve body.

2. Control valve according to Claim 1, **characterized in that** the elastic means comprise at least one spring member (68; 86) interposed between the ends (44, 46) of the sealing segment (42) in order to separate them from one another.

3. Control valve according to Claim 2, **characterized in that** the spring member is a retaining ring (68) formed from a spring-effect material.

4. Control valve according to Claim 3, **characterized in that** the retaining ring (68) comprises a U-shaped bend (70) connecting two branches (72) arranged in order to be pressed against the ends (44, 46) of the sealing segment (42).

5. Control valve according to Claim 2, **characterized in that** the spring member is a metal sheet (86) having two opposite sides (88, 90) arranged in order to be pressed against the ends (44, 46) of the sealing segment (42).

6. Control valve according to one of Claims 2 to 5, **characterized in that** the two ends (44, 46) of the sealing segment (42) are made in the form of two folded edges delimiting two parallel and facing grooves (74, 76) for accommodating the spring member.

7. Control valve according to Claim 1, **characterized in that** the elastic means comprise at least one spring member (94) made in the form of a radial expansion ring interposed between the adjustment member (26) and the sealing segment (42).

8. Control valve according to Claim 7, **characterized in that** it comprises two radial expansion rings (94) made in the form of retaining rings from spring material and each inserted into a peripheral groove (96) of the adjustment member (26).

9. Control valve according to Claim 1, **characterized in that** the elastic means comprise a deformation of the sealing segment (42) so that it has an external diameter (D1) which is greater than the internal diameter (D2) of the housing in order to allow the sealing segment to be installed in the housing under prestress.

10. Control valve according to one of Claims 1 to 9, **characterized in that** the sealing segment (42) is made of a spring-effect material, in particular of spring steel.

11. Control valve according to Claim 10, **characterized in that** the sealing segment (42) is furnished externally with a coating (64) made of a material with a low friction coefficient.

12. Control valve according to Claim 11, **characterized in that** the material with a low friction coefficient is chosen from the polyamides and polyfluoroethylene.

13. Control valve according to one of Claims 11 and 12, **characterized in that** the sealing segment (42) is furnished with an adhesion layer (62) in order to make it easier for the coating (64) to adhere.

14. Control valve according to one of Claims 1 to 13, **characterized in that** the sealing segment (42) comprises a smooth outer surface into which emerge a multiplicity of evenly distributed blind holes (66) which makes it possible to reduce the contact surface between the sealing segment (42) and the side wall (16).

15. Control valve according to one of Claims 1 to 14, **characterized in that** the said valve body (12) comprises a bottom wall (14) into which an axial orifice (18) emerges and a side wall (16) into which at least two side orifices (20, 22, 24) emerge, the axial orifice (18) forming a fluid inlet, while the side orifices (20, 22, 24) form fluid outlets.

16. Fluid circulation circuit, **characterized in that** it comprises a control valve according to Claim 15, whose axial orifice (18) is connected to a source of fluid (108) and whose side orifices (20, 22, 24) are respectively connected to branches (110, 118, 116) of the circuit.

17. Circulation circuit according to Claim 16, **characterized in that** it is made in the form of a cooling circuit (102) of a heat engine (104) of a motor vehicle, which is travelled through by a cooling fluid under the action of a circulation pump (106), and **in that** the control valve (10) is a three-way valve whose axial orifice (18) is connected to an inlet (108) of cooling fluid from the engine, and whose three side orifices (20, 24, 22) are respectively connected to a first branch (110) which contains a radiator (112) for cooling the engine, to a second branch (116) which forms a bypass of the cooling radiator and to a third branch (118) which contains a unit heater (120) to heat a passenger compartment.

## Patentansprüche

1. Steuerventil für einen Fluidumwälzkreislauf, das einen Ventilkörper (12), einen Regelungsorgan (26) und einen Dichtungssegment (42) aufweist, wobei der Ventilkörper eine drehsymmetrische Aufnahme für den Regelungsorgan (26) begrenzt, besagtes Regelungsorgan (26) fähig ist, um eine Drehachse (X) zu drehen und verschiedene Winkelstellungen einzunehmen, um die Ausgabe(Abgabe) des Fluids durch Öffnungen des Ventilkörpers (12) hindurch zu steuern, um die Ausgabe des Fluids durch Öffnungen von dem Ventilkörper (12) hindurch zu steuern, und bei dem besagt Regelungsorgan (26) von dem besagt Dichtungssegment (42) in Form eines offenen Rings umgeben ist, der drehfest mit dem Regelungsorgan (26) verbunden ist,
**dadurch gekennzeichnet, dass** besagtes Steurventil beinhaltet elastische Mittel (68; 86; 94) vorgesehen, die zwei Enden (44, 46) des Dichtungssegments (42) auseinander drücken, um es radial nach außen zu verformen und so ein Andrücken des Dichtungssegments (42) gegen die Aufnahme des Ventilkörpers zu gewährleisten.

2. Steuerventil nach Anspruch 1, **dadurch gekennzeichnet, dass** die elastischen Mittel mindestens ein Federorgan (68; 86) aufweisen, das zwischen die Enden (44, 46) des Dichtungssegments (42) eingefügt wird, um sie voneinander zu entfernen.

3. Steuerventil nach Anspruch 2, **dadurch gekennzeichnet, dass** das Federorgan ein Stab (68) ist, der aus einem Werkstoff mit Federwirkung geformt wird.

4. Steuerventil nach Anspruch 3, **dadurch gekennzeichnet, dass** der Stab (68) einen U-förmigen Knick (70) aufweist, der zwei Schenkel (72) verbindet, die eingerichtet sind, um gegen die Enden (44, 46) des Dichtungssegments (42) angelegt zu werden.

5. Steuerventil nach Anspruch 2, **dadurch gekennzeichnet, dass** das Federorgan ein Metallblech (86) ist, das zwei gegenüberliegende Seiten (88, 90) aufweist, die eingerichtet sind, um gegen die Enden (44, 46) des Dichtungssegments (42) angelegt zu werden.

6. Steuerventil nach einem der Ansprüche 2 bis 5, **dadurch gekennzeichnet, dass** die zwei Enden (44, 46) des Dichtungssegments (42) in Form von zwei umgebogenen Rändern hergestellt sind, die zwei einander gegenüberliegende parallele Rillen (74, 76) für die Aufnahme des Federorgans begrenzen.

7. Steuerventil nach Anspruch 1, **dadurch gekennzeichnet, dass** die elastischen Mittel mindestens ein Federorgan (94) aufweisen, das in Form eines Rings mit radialer Ausdehnung hergestellt ist, der zwischen das Regelungsorgan (26) und das Dichtungssegment (42) eingefügt ist.

8. Steuerventil nach Anspruch 7, **dadurch gekennzeichnet, dass** es zwei Ringe (94) mit radialer Ausdehnung aufweist, die in Form von Stäben aus Federwerkstoff hergestellt und je in eine Umfangsrille (96) des Regelungsorgans (26) eingeführt sind.

9. Steuerventil nach Anspruch 1, **dadurch gekennzeichnet, dass** die elastischen Mittel eine Verformung des Dichtungssegments (42) aufweisen, damit es einen Außendurchmesser (D1) aufweist, der größer ist als der Innendurchmesser (D2) der Aufnahme, um eine Montage des Dichtungssegments in die Aufnahme unter Vorspannung zu ermöglichen.

10. Steuerventil nach einem der Ansprüche 1 bis 9, **dadurch gekennzeichnet, dass** das Dichtungssegment (42) aus einem Werkstoff mit Federwirkung hergestellt wird, insbesondere aus Federstahl.

11. Steuerventil nach Anspruch 10, **dadurch gekennzeichnet, dass** das Dichtungssegment (42) außen mit einer Verkleidung (64) versehen ist, die aus einem Stoff mit geringem Reibungskoeffizient hergestellt wird.

12. Steuerventil nach Anspruch 11, **dadurch gekennzeichnet, dass** der Stoff mit geringem Reibungskoeffizient aus den Polyamiden und Polyfluorethylen ausgewählt wird.

13. Steuerventil nach einem der Ansprüche 11 und 12, **dadurch gekennzeichnet, dass** das Dichtungssegment (42) mit einer Befestigungsschicht (62) versehen ist, um die Befestigung der Verkleidung (64) zu vereinfachen.

14. Steuerventil nach einem der Ansprüche 1 bis 13, **dadurch gekennzeichnet, dass** das Dichtungssegment (42) eine glatte Außenfläche aufweist, in die mehrere gleichmäßig verteilte Sacklöcher (66) münden, was es ermöglicht, die Kontaktfläche zwischen dem Dichtungssegment (42) und der Seitenwand (16) zu verringern.

15. Steuerventil nach einem der Ansprüche 1 bis 14, **dadurch gekennzeichnet, dass** der Ventilkörper (12) eine Bodenwand (14), in die eine axiale Öffnung (18) mündet, und eine Seitenwand (16) aufweist, in die mindestens zwei seitliche Öffnungen (20, 22, 24) münden, wobei die axiale Öffnung (18) einen Fluideingang bildet, während die seitlichen Öffnungen (20, 22, 24) Fluidausgänge bilden.

16. Fluidumwälzkreislauf, **dadurch gekennzeichnet, dass** er ein Steuerventil nach Anspruch 15 aufweist, dessen axiale Öffnung (18) mit einer Fluidquelle (108) verbunden ist und dessen seitliche Öffnungen (20, 22, 24) je mit Zweigen (110, 118, 116) des Kreislaufs verbunden sind.

17. Umwälzkreislauf nach Anspruch 16, **dadurch gekennzeichnet, dass** er in Form eines Kühlkreislaufs (102) eines Wärmemotors (104) eines Kraftfahrzeugs hergestellt wird, der von einem Kühlfluid unter der Wirkung einer Umwälzpumpe (106) durchflossen wird, und dass das Steuerventil (10) ein Dreiwegeventil ist, dessen axiale Öffnung (18) mit einer Zufuhr (108) von Kühlfluid verbunden ist, das vom Motor kommt, und dessen drei seitliche Öffnungen (20, 24, 22) mit einem ersten Zweig (110), der einen Kühler (112) des Motors enthält, einem zweiten Zweig (116), der eine Ableitung des Kühlers bildet, bzw. mit einem dritten Zweig (118) verbunden sind, der einen Heisslufterzeuger (120) zum Heizen eines Innenraums enthält.
